# EUROPEAN PATENT SPECIFICATION

(11) **EP 3 745 225 B1**
(45) Date of publication and mention of the grant of the patent: **20.12.2023**
(21) Application number: 19761051.2
(22) Date of filing: 15.02.2019
(51) Int. Cl.: G05B 19/4063, B23Q 17/09, G05B 23/02, G05B 19/4093

(54) **MANAGEMENT DEVICE, MANAGEMENT METHOD, AND PROGRAM**
VERWALTUNGSVORRICHTUNG, VERWALTUNGSVERFAHREN UND PROGRAMM
DISPOSITIF ET PROCÉDÉ DE GESTION, ET PROGRAMME

(30) Priority: 27.02.2018 JP 2018033363
(43) Date of publication of application: 02.12.2020
(73) Proprietor: MITSUBISHI HEAVY INDUSTRIES, LTD., Chiyoda-ku Tokyo 100-8332 (JP)
(72) Inventor: NOZAKI Tatsuya, Tokyo 100-8332 (JP); MORITA Katsuaki, Tokyo 100-8332 (JP); ENOMOTO Tomoyuki, Tokyo 100-8332 (JP)
(74) Representative: Henkel & Partner mbB
(86) International application number: PCT/JP2019/005586
(87) International publication number: WO 2019/167676

(56) References cited:
- EP-A2- 1 342 534
- WO-A1-2010/116989
- JP-A- 2002 304 207
- JP-A- 2004 070 424
- JP-A- 2004 070 424
- JP-A- 2017 154 199
- US-A1- 2012 084 030
- US-A1- 2013 178 973

## Description

### [Technical Field]

The present invention relates to a management device, a management method, and a program.

### [Background Art]

Patent Literature 1 discloses a technology of detecting power consumption of an electric motor of a multi-spindle drilling machine to determine a plate thickness of a workpiece.

### [Citation List]

### [Patent Literature]

[Patent Literature 1]
Japanese Unexamined Utility Model Application, First Publication No. 63-172507

US 2012/084030 A1 discloses a processing machine processing a work and repeating processes on the work, thereby consuming energy. Within the consumed energy, room for improvement is computed by an energy monitoring device and is referred to as an amount of energy that can be improved. An energy monitoring device includes a power data acquirer that acquires a time-series power data measured by a power meter, a cycle detector that detects a single-cycle power data from the power data acquired by the acquirer, a divider that divides the single-cycle power data detected by the detector into an added-value creating portion and an unproductive portion, and a computing unit that computes an amount of energy consumed in the unproductive portion divided by the divider and defines it as the amount of energy to be improved.

### [Summary of Invention]

### [Technical Problem]

According to the technology disclosed in Patent Literature 1, it is possible to measure the plate thickness of the workpiece to be punched by the multi-spindle drilling machine. This is because the plate thickness of the workpiece is proportional to total power consumption required for drilling of the multi-spindle drilling machine. On the other hand, in recent years, there is a machine tool such as an NC lathe capable of performing not only simple drilling but also complicated cutting work. In a machine which executes such complicated work, a workpiece or the work content (process) and the total power consumption are not necessarily in a proportional relationship. Therefore, there is a case where the process cannot be specified depending on a method based on the total power consumption of the machine in the same manner as the technology described in Patent Literature 1.

An object of the present invention is to provide a management device, a management method, and a program capable of estimating a process of a machine which executes a complicated work.

### [Solution to Problem]

According to the present invention, there is provided a management device as set out in independent claim 1, a management method as set out in independent claim 5, and a program as set out in independent claim 6. Advantageous developments are defined in the dependent claims.

### [Advantageous Effects of Invention]

According to at least one of the above aspects, a management device can estimate a process of a machine which executes a complicated work.

### [Brief Description of Drawings]

Fig. 1 is a schematic diagram showing a configuration of a process management system according to a first embodiment.
Fig. 2 is a schematic block diagram showing a configuration of a management device according to the first embodiment.
Fig. 3 is a flowchart showing an operation in a learning phase by the management device according to the first embodiment.
Fig. 4 is a time chart showing performance of a process of each sub time series and a result of clustering each sub time series.
Fig. 5 is a flowchart showing an operation in an estimation phase by the management device according to the first embodiment.
Fig. 6 is a schematic block diagram showing a configuration of a management device according to a second embodiment.
Fig. 7 is a flowchart showing an operation in an estimation phase by the management device according to the second embodiment.
Fig. 8 is a flowchart showing an operation in a learning phase by a management device according to a third embodiment.
Fig. 9 is a flowchart showing an operation in an estimation phase by the management device according to the third embodiment.
Fig. 10 is a schematic block diagram showing a configuration of a computer according to at least one embodiment.

### [Description of Embodiments]

### <First Embodiment>

### <<Process Management System>>

Hereinafter, embodiments will be described in detail with reference to drawings.

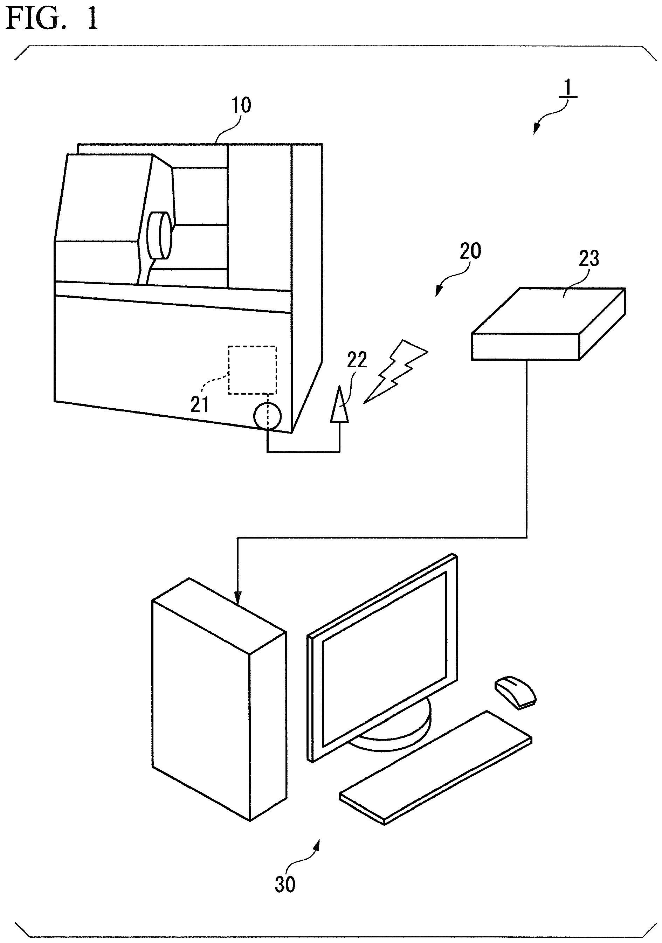

Fig. 1 is a schematic diagram showing a configuration of a process management system according to a first embodiment.

A process management system 1 includes a machine tool 10, a measurement system 20, and a management device 30.

The machine tool 10 is driven by electric power and executes various processes according to an operation of an operator. In the first embodiment, a numerical control (NC) lathe is an example of the machine tool 10. The machine tool 10 can work various products (workpieces). The work on each workpiece by the machine tool 10 is an example of each process of the machine tool 10.

The measurement system 20 measures a value (for example, a current value, a voltage, electric energy, or the like) related to power consumption of the machine tool 10. The following is an example of a configuration of the measurement system 20. The measurement system 20 includes a clamp meter 21, a transmitter 22, and a receiver 23. The clamp meter 21 is an ammeter which sandwiches a power line which supplies power to the machine tool 10 to measure a current flowing through the power line without opening an electric circuit. The transmitter 22 and the receiver 23 are connected to each other by wireless communication. The wireless communication is independent of wireless communication used in a facility in which the machine tool 10 is installed. Therefore, the wireless communication by the measurement system 20 does not interfere with the wireless communication environment of the facility. The transmitter 22 is installed near the clamp meter 21 and is connected to the clamp meter 21 by wire. The transmitter 22 transmits the current value measured by the clamp meter 21 to the receiver 23 by wireless communication. The receiver 23 records the current value received from the transmitter 22 as a time series. The management device 30 can acquire the time series of the current value recorded in the receiver 23. The configuration of the measurement system 20 is not limited to this. The measurement system 20 generates a time series by, for example, measuring a value related to power consumption at 1-minute intervals.

The management device 30 specifies a process executed by the machine tool 10 based on the time series of the power consumption input from the measurement system 20. Specifically, the management device 30 estimates a type of a workpiece machined by the machine tool 10.

### «Configuration of Management device»

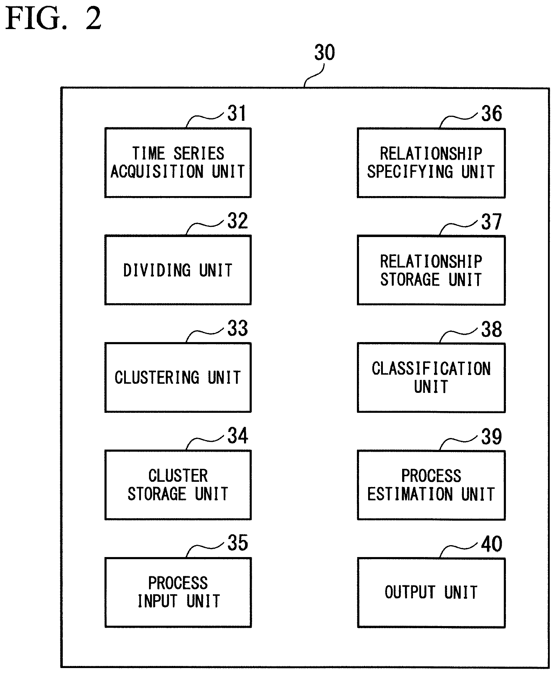

Fig. 2 is a schematic block diagram showing a configuration of a management device according to the first embodiment.

The management device 30 includes a time series acquisition unit 31, a dividing unit 32, a clustering unit 33, a cluster storage unit 34, a process input unit 35, a relationship specifying unit 36, a relationship storage unit 37, a classification unit 38, a process estimation unit 39, and an output unit 40.

The time series acquisition unit 31 acquires a time series related to power consumption from the measurement system 20. The time series acquisition unit 31 can acquire, for example, a DI signal and a time series of a current value of a main power supply as the time series related to the power consumption.

The dividing unit 32 divides the time series related to the power consumption acquired by the time series acquisition unit 31 into a plurality of sub time series by cutting out the time series at certain time intervals. A length of the sub time series (for example, 1 hour) is longer than a measurement interval of the time series (for example, 1 minute). The dividing unit 32 may generate the plurality of sub time series by cutting out the time series without duplication, or may generate the plurality of sub time series while partially overlapping the time series with a window function. At this time, the dividing unit 32 excludes a sub time series related to a time when no current flows from a clustering target. For example, in a case where an average value of current values related to the sub time series is less than a predetermined threshold value, in a case where a maximum value of the current value is less than a predetermined threshold value, in a case where a DI signal always indicates OFF, or the like, the dividing unit 32 excludes the sub time series from the clustering target.

The clustering unit 33 divides the plurality of sub time series related to power consumption divided by the dividing unit 32 into a plurality of clusters by untaught learning. For example, the clustering unit 33 performs clustering on the plurality of sub time series by a method such as a K-means method, a ward method, a shortest distance method, a group average method, and a self-organizing map. The number of clusters divided by the clustering unit 33 is set to a value larger than the number of types of processes to be estimated.

The cluster storage unit 34 stores boundary information indicating a boundary of the clusters divided by the clustering unit 33. The boundary of the clusters can be specified as a Voronoi boundary, for example.

The process input unit 35 receives an input of process information indicating a process executed by the machine tool 10 while the measurement system 20 measures a current for specific learning of the process, as teaching data. That is, the process information is information associating a content of the process with a time (a time zone) when the process is executed. As the process information, for example, production plan information by the machine tool 10 or work record information input by an operator of the machine tool 10 can be used.

The relationship specifying unit 36 associates each sub time series divided by the dividing unit 32 with a type of the process based on the process information input to the process input unit 35. The relationship specifying unit 36 specifies a relationship between the cluster and the process, based on the sub time series belonging to each cluster divided by the clustering unit 33 and the type of the process associated with each sub time series. For example, in a case where the sub time series related to the first process is dominant in the sub time series belonging to the first cluster, the relationship specifying unit 36 associates the first cluster with the first process. The relationship specifying unit 36 may specify the relationship between the cluster and the process by a machine learning method using a neural network model or the like.

The relationship storage unit 37 stores the relationship information indicating the relationship between the cluster and the process specified by the relationship specifying unit 36. In a case where the relationship specifying unit 36 specifies the relationship between the cluster and the process by the machine learning method, the relationship storage unit 37 stores a learned model as the relationship information.

In a case where sufficient information is accumulated in the cluster storage unit 34 and the relationship storage unit 37, the classification unit 38 classifies the sub time series divided by the dividing unit 32 into the cluster, based on the boundary information stored in the cluster storage unit 34.

The process estimation unit 39 estimates the process of the machine tool 10 from the cluster classified by the classification unit 38, based on the relationship information stored in the relationship storage unit 37. In a case where the relationship storage unit 37 stores the learned model, the process estimation unit 39 obtains the process of the machine tool 10 by inputting the cluster classified by the classification unit 38 into the learned model stored in the relationship storage unit 37.

The output unit 40 outputs the process estimated by the process estimation unit 39. For example, the output unit 40 outputs the process of each sub time series estimated by the process estimation unit 39 as display data of a time chart.

### <<Operation of Management device>>

An operation of the management device 30 has clustering of a time series related to power consumption, a learning phase for learning a relationship between a cluster and a process, and an estimation phase for estimating the process of the machine tool 10 based on the learned relationship. Hereinafter, an operation in the learning phase and an operation in the estimation phase of the management device 30 will be described.

### <<Operation of Management device in Learning Phase>>

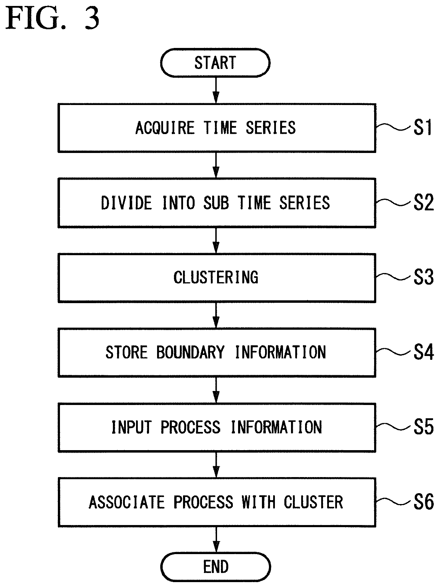

Fig. 3 is a flowchart showing an operation in a learning phase by the management device according to the first embodiment.

In a case where the management device 30 is in a learning phase, the time series acquisition unit 31 of the management device 30 acquires a time series related to power consumption of the machine tool 10 from the measurement system 20 (step S1). Here, the time series acquisition unit 31 needs to acquire a time series related to power consumption having a sufficient length (for example, one month) for learning a process estimation. When the time series acquisition unit 31 acquires the time series, the dividing unit 32 divides the acquired time series into a plurality of sub time series for each unit time (for example, 1 hour) (step S2). At this time, the dividing unit 32 excludes the time series in a time zone in which a current is not detected.

Next, the clustering unit 33 divides the plurality of sub time series divided by the dividing unit 32 into a plurality of clusters by clustering (step S3). At this time, the clustering unit 33 performs clustering without using information about which process each sub time series relates to. When the sub time series is divided into clusters, the clustering unit 33 records boundary information indicating a boundary of each cluster in the cluster storage unit 34 (step S4). Thus, the classification unit 38 can classify the unknown sub time series into known clusters.

Further, the process input unit 35 accepts an input of process information indicating performance of a process of the machine tool 10 in a period corresponding to the time series acquired by the time series acquisition unit 31 (step S5). The relationship specifying unit 36 specifies a relationship between the process information input to the process input unit 35 and the clusters classified by the clustering unit 33, and records relationship information indicating the relationship in the relationship storage unit 37 (step S6).

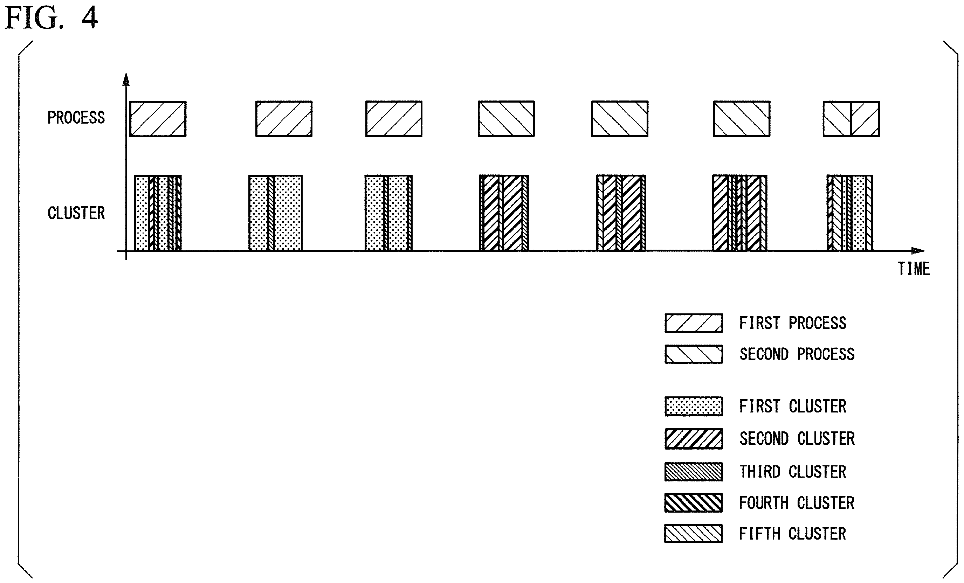

Fig. 4 is a time chart showing performance of a process of each sub time series and a result of clustering each sub time series.

As shown in Fig. 4, it can be seen that a time series related to the first process is largely classified into the first cluster and the third cluster. Further, it can be seen that a time series related to the second process is largely classified into the second cluster and the fifth cluster. In this manner, it can be seen that even if the clustering is performed without using information related to the process, a strong correlation is generated between the cluster and the process. In the example shown in Fig. 4, the relationship specifying unit 36 associates the first process with the first cluster and the third cluster, associates the second process with the second cluster and the fifth cluster, and records the association in the relationship storage unit 37.

Thus, the management device 30 can end the learning phase.

### <<Operation of Management device in Estimation Phase>>

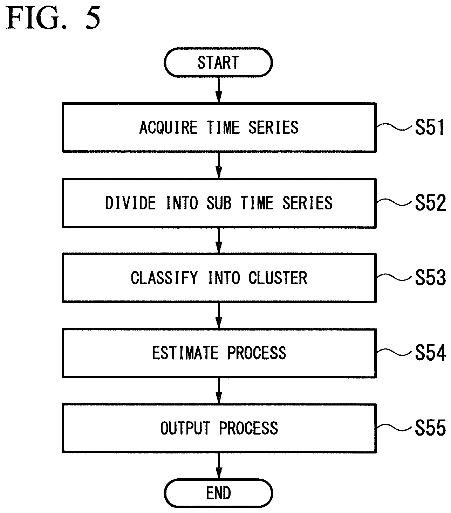

Fig. 5 is a flowchart showing an operation in an estimation phase by the management device according to the first embodiment.

When a learning phase ends, the management device 30 can estimate a process of the machine tool 10 based on an unknown time series related to power consumption of the machine tool 10.

In a case where the management device 30 is in an estimation phase, the time series acquisition unit 31 of the management device 30 acquires a time series related to power consumption of the machine tool 10 from the measurement system 20 (step S51). Here, the time series acquisition unit 31 acquires a time series related to power consumption in a time zone (for example, one day) which is a process estimation target. When the time series acquisition unit 31 acquires the time series, the dividing unit 32 divides the acquired time series into a plurality of sub time series for each unit time (for example, 1 hour) (step S52). At this time, the dividing unit 32 excludes the time series in a time zone in which a current is not detected.

Next, the classification unit 38 classifies each of the plurality of sub time series divided by the dividing unit 32 into a cluster based on boundary information stored in the cluster storage unit 34 (step S53). Next, the process estimation unit 39 estimates the process executed by the machine tool 10 in a time zone indicated by the sub time series, based on relationship information stored in the relationship storage unit 37 (step S54). Specifically, for each sub time series, the process estimation unit 39 specifies a cluster into which the sub time series is classified and specifies a process associated with the cluster to estimate the process in a time zone indicated by the sub time series. The output unit 40 outputs the estimated process (step S55).

### <<Action and Effect>>

In this manner, the management device 30 according to the first embodiment classifies the sub time series related to the power consumption of the machine tool 10 for a certain time into the clusters and estimates the process of the machine tool 10 based on the relationship information indicating the classified cluster and the relationship between the cluster and the process. Thus, the management device 30 can estimate the process of the machine tool 10 which executes a complicated work based on the value related to the power consumption.

Thus, an administrator can easily recognize a progress status of a production process by comparing an estimation result of the process output by the management device 30 with a production plan.

The dividing unit 32 according to the first embodiment excludes a sub time series related to a time when no current flows from a clustering target, but the embodiment is not limited to this. For example, the management device 30 according to another embodiment may perform clustering including the sub time series related to the time when no current flows.

### <Second Embodiment>

The management device 30 according to the first embodiment estimates the process of the machine tool 10 by specifying the process associated with the cluster classified for each sub time series. On the other hand, not all sub time series are assigned to the cluster associated with the correct process. For example, as shown in Fig. 4, there is a sub time series classified into the second cluster even though the sub time series is a sub time series related to the first process or a sub time series classified into the third cluster even though the sub time series is a sub time series related to the second process.

The management device 30 according to the second embodiment estimates the process by suppressing an influence of such classification noise.

### «Configuration of Management device»

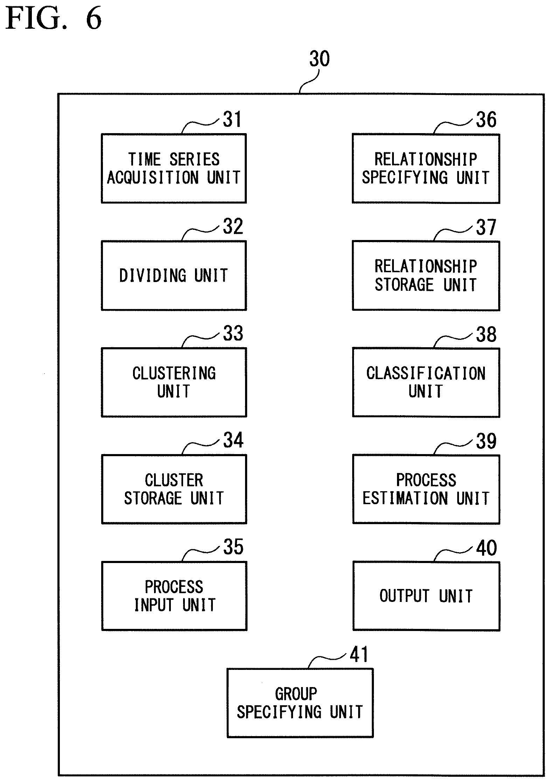

Fig. 6 is a schematic block diagram showing a configuration of a management device according to a second embodiment.

The management device 30 according to the second embodiment further includes a group specifying unit 41 in addition to the configuration of the first embodiment. The group specifying unit 41 groups a plurality of sub time series divided by the dividing unit 32 into groups each including a plurality of continuous sub time series while the machine tool 10 is in operation. Specifically, the group specifying unit 41 groups the plurality of sub time series by dividing the plurality of sub time series in a time zone in which a current excluded by the dividing unit 32 is not detected. For example, in the example shown in Fig. 4, the plurality of sub time series are divided into seven sub time series groups.

Further, an operation of the process estimation unit 39 according to the second embodiment is different from that of the first embodiment.

### <<Operation of Management device>>

An operation of the management device 30 according to the second embodiment has a learning phase and an estimation phase, in the same manner as in the first embodiment. An operation in the learning phase of the management device 30 according to the second embodiment is the same as that of the first embodiment. Therefore, an operation in the estimation phase of the management device 30 according to the second embodiment will be described below.

### <<Operation of Management device in Estimation Phase>>

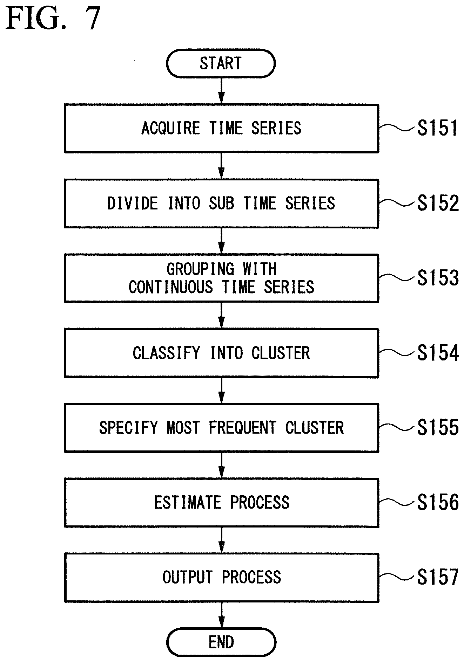

Fig. 7 is a flowchart showing an operation in an estimation phase by the management device according to the second embodiment.

In a case where the management device 30 is in an estimation phase, the time series acquisition unit 31 of the management device 30 acquires a time series related to power consumption of the machine tool 10 from the measurement system 20 (step S151). Here, the time series acquisition unit 31 acquires a time series related to power consumption in a time zone (for example, one day) which is a process estimation target. When the time series acquisition unit 31 acquires the time series, the dividing unit 32 divides the acquired time series into a plurality of sub time series for each unit time (for example, 1 hour) (step S152). At this time, the dividing unit 32 excludes the time series in a time zone in which a current is not detected.

Next, the group specifying unit 41 groups a plurality of sub time series divided by the dividing unit 32 into groups each including a plurality of continuous sub time series while the machine tool 10 is in operation (step S153).

Next, the classification unit 38 classifies each of the plurality of sub time series divided by the dividing unit 32 into a cluster based on boundary information stored in the cluster storage unit 34 (step S154). Next, for each group grouped by the group specifying unit 41, among the clusters classified into each sub time series belonging to the group, the process estimation unit 39 specifies the most frequent one (the one having a large number of appearances or one having the longest occupied time) (step S155). For example, in a group configured with the sub time series of the machine tool 10, in a case where 7 sub time series are classified into the first cluster, 2 sub time series are classified into the second cluster, and 1 sub time series is classified into the third cluster, the process estimation unit 39 specifies the first cluster as the most frequent cluster in the group.

Next, the process estimation unit 39 estimates the process executed by the machine tool 10 for each group based on the relationship information stored in the relationship storage unit 37 (step S156). Specifically, for each group, the process estimation unit 39 specifies the most frequent cluster in the group and specifies the process associated with the cluster to estimate the process in a time zone related to each group. The output unit 40 outputs the estimated process (step S157).

### <<Action and Effect>>

In this manner, according to the second embodiment, based on the type of the cluster into which each of a plurality of continuous sub time series while the machine tool 10 is in operation is classified, the management device 30 estimates the process executed by the machine tool 10 at a time related to the plurality of sub time series. In particular, the management device 30 according to the second embodiment estimates a process associated with the most frequent cluster among the clusters into which the sub time series belonging to the same group are classified, as the process executed by the machine tool 10 in the time related to the time series belonging to the group. Thus, the management device 30 can estimate the process by suppressing the influence of the classification noise on the cluster. This means that in a case where the workpiece to be machined by the machine tool 10 is relatively small (for example, in a case where a plurality of workpieces can be produced in a unit time of a sub time series), the machine tool 10 generally continues to produce the identical workpiece while the machine tool 10 is continuously in operation and it is rare to switch components to be produced during continuous operation. The workpiece to be machined by the machine tool 10 may of course be relatively large.

For example, the most frequent cluster in the leftmost group in Fig. 4 is the first cluster. Therefore, according to the second embodiment, although the time series classified into the second cluster and the third cluster is included in the group, the management device 30 can estimate that the first process is executed in the time zone related to the group.

The management device 30 according to the second embodiment estimates the process based on only the most frequent cluster, but the embodiment is not limited to this. For example, the management device 30 according to another embodiment may estimate the process based on two or more clusters having higher appearance frequencies. In this case, the relationship specifying unit 36 may generate relationship information indicating a relationship between an appearance ratio of the cluster and the process, and the process estimation unit 39 may estimate the process based on the appearance ratio of the cluster.

### <Third Embodiment>

The management device 30 according to the first and second embodiments can accurately estimate a process when the machine tool 10 repeatedly executes the process completed in a relatively short time. On the other hand, depending on a type of a workpiece, it may take several hours to process one workpiece. The management device 30 according to the third embodiment accurately estimates a process when executing a process which takes a relatively long time.

A configuration of the management device 30 according to the third embodiment has the same manner as that of the second embodiment. On the other hand, operations of the relationship specifying unit 36 and the process estimation unit 39 according to the third embodiment are different from those of the second embodiment.

### <<Operation of Management device>>

An operation of the management device 30 has a learning phase and an estimation phase, in the same manner as in the first and second embodiments. Hereinafter, an operation in the learning phase and an operation in the estimation phase of the management device 30 will be described.

### <<Operation of Management device in Learning Phase>>

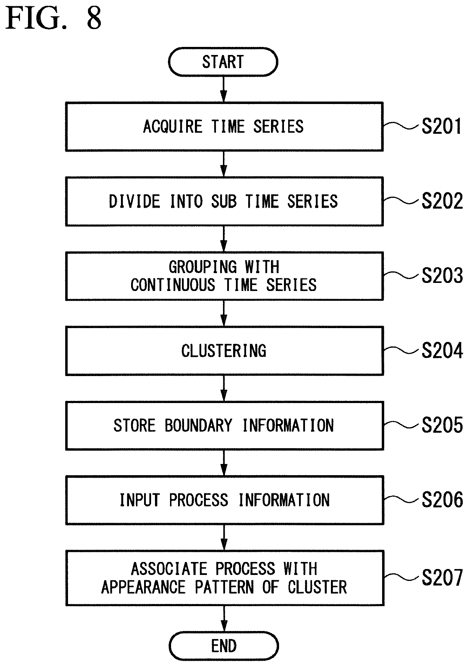

Fig. 8 is a flowchart showing an operation in a learning phase by a management device according to a third embodiment.

In a case where the management device 30 is in a learning phase, the time series acquisition unit 31 of the management device 30 acquires a time series related to power consumption of the machine tool 10 from the measurement system 20 (step S201). Here, the time series acquisition unit 31 needs to acquire a time series related to power consumption having a sufficient length (for example, one month) for learning a process estimation. When the time series acquisition unit 31 acquires the time series, the dividing unit 32 divides the acquired time series into a plurality of sub time series for each unit time (for example, 1 hour) (step S202). At this time, the dividing unit 32 excludes the time series in a time zone in which a current is not detected.

Next, the group specifying unit 41 groups a plurality of sub time series divided by the dividing unit 32 into groups each including a plurality of continuous sub time series while the machine tool 10 is in operation (step S203).

Next, the clustering unit 33 divides the plurality of sub time series divided by the dividing unit 32 into a plurality of clusters by clustering (step S204). At this time, the clustering unit 33 performs clustering without using information about which process each time series relates to and which group each time series belongs to. When the sub time series is divided into clusters, the clustering unit 33 records boundary information indicating a boundary of each cluster in the cluster storage unit 34 (step S205).

Further, the process input unit 35 accepts an input of process information indicating performance of the process of the machine tool 10 in a period corresponding to the time series acquired by the time series acquisition unit 31 (step S206). The relationship specifying unit 36 specifies a relationship between the process information input to the process input unit 35 and a pattern of the cluster into which the time series belonging to the same group is divided and records relationship information indicating the relationship in the relationship storage unit 37 (step S207). An example of the pattern of the cluster includes an appearance order and an appearance frequency of the cluster. The relationship specifying unit 36 may specify the relationship between the process information and the cluster pattern based on machine learning such as a neural network.

### <<Operation of Management device in Estimation Phase>>

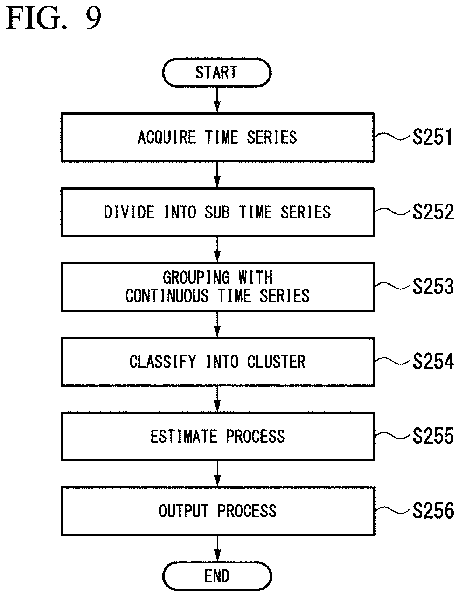

Fig. 9 is a flowchart showing an operation in an estimation phase by the management device according to the third embodiment.

In a case where the management device 30 is in an estimation phase, the time series acquisition unit 31 of the management device 30 acquires a time series related to power consumption of the machine tool 10 from the measurement system 20 (step S251). Here, the time series acquisition unit 31 acquires a time series related to power consumption in a time zone (for example, one day) which is a process estimation target. When the time series acquisition unit 31 acquires the time series, the dividing unit 32 divides the acquired time series into a plurality of sub time series for each unit time (for example, 1 hour) (step S252). At this time, the dividing unit 32 excludes the time series in a time zone in which a current is not detected.

Next, the group specifying unit 41 groups a plurality of sub time series divided by the dividing unit 32 into groups each including a plurality of continuous sub time series while the machine tool 10 is in operation (step S253).

Next, the classification unit 38 classifies each of the plurality of sub time series divided by the dividing unit 32 into a cluster based on boundary information stored in the cluster storage unit 34 (step S254). Next, based on the relationship information stored in the relationship storage unit 37, for each group grouped by the group specifying unit 41, the process estimation unit 39 estimates the process executed by the machine tool 10 from an appearance pattern of the cluster classified into each sub time series belonging to the group (step S255). Specifically, for each group, the process estimation unit 39 compares an appearance pattern of the cluster in the group with an appearance pattern of the cluster included in the relationship information stored in the relationship storage unit 37 and specifies the process associated with the most similar pattern to estimate the process in a time zone related to each group. At this time, the process estimation unit 39 may specify the process by partial matching with a forward matching for the appearance pattern of the cluster. In this case, the process being executed can be specified even in a case where the process of the machine tool 10 is not completed in the time series acquired by the time series acquisition unit 31. That is, the process estimation unit 39 can estimate the process even in the middle stage of the process by the partial matching with the forward matching. The output unit 40 outputs the estimated process (step S256).

### <<Action and Effect>>

In this manner, the management device 30 according to the third embodiment specifies the process based on the appearance pattern of the clusters in continuous sub time series. Thus, the management device 30 can accurately estimate the process even in a case where the process which takes a relatively long time is executed. The process which takes a relatively long time is often configured with a plurality of smaller sub processes. For example, a process of processing a certain component is configured with a plurality of sub processes such as bottom surface processing, upper surface processing, peripheral surface processing, and hole processing. In such a case, each sub process is classified into a cluster by clustering time series related to power consumption. In a certain process, if an order of the sub processes constituting the process is determined to some extent, this appears as appearance pattern of the cluster. Therefore, the management device 30 can accurately estimate the process by using the appearance pattern of the cluster even in a case where the process which takes a relatively long time is executed. The workpiece to be machined by the machine tool 10 may of course be relatively small.

In the third embodiment, the process estimation unit 39 can estimate the process even in the middle stage of the process by performing partial matching with the forward matching for the appearance pattern of the cluster. At this time, the process estimation unit 39 may predict a time series related to future power consumption based on a partial matching result. In this case, the process estimation unit 39 may estimate the process based on the time series related to the future power consumption. Further, in this case, the process estimation unit 39 may predict a progress of the future process based on the time series related to the future power consumption. The management device 30 specifies the process in a case where the process of the machine tool 10 is not completed, so that the administrator can recognize a status of the machine tool in real time.

### <Other Embodiments>

Although one embodiment is described in detail above with reference to the drawings, a specific configuration is not limited to the above, and various design modifications and the like can be made.

For example, the management device 30 according to the above-described embodiment first acquires a time series related to power consumption from the measurement system 20 and divides the time series into a plurality of sub time series to estimate a process, but the embodiment is not limited to this. For example, the management device 30 according to another embodiment may not divide into sub time series by acquiring a time series for a certain time from the measurement system 20 and performing clustering and classification by using the time series.

Further, for example, in the measurement system 20 according to the above-described embodiment, in a case where the types of processes to be determined increase, the management device 30 needs to shift to the learning phase again. On the other hand, since the sub time series other than the increased processes are already acquired, the management device 30 can perform relearning by adding a sub time series related to a new process and performing clustering again.

Further, in the above-described embodiment, the measurement system 20 measures the current of the power line with one clamp meter 21, but the embodiment is not limited to this. For example, the measurement system 20 according to another embodiment may measure the current of the power line for each machining axis, and the management device 30 may estimate the process based on a time series including the current.

Further, in the above-described embodiment, the case where a target to be managed by the management device 30 is the machine tool 10 is described, but the embodiment is not limited to this. For example, in another embodiment, another electrically driven machine such as a robot may be the target to be managed by the management device 30.

Further, in the above-described embodiment, the management device 30 executes both learning and estimation, but the embodiment is not limited to this. For example, in another embodiment, an apparatus which learns a boundary or relationship information of a cluster, an apparatus which stores a learned model which is a learning result, and a management device 30 which performs estimation using the learned model may be provided separately.

### <Computer Configuration>

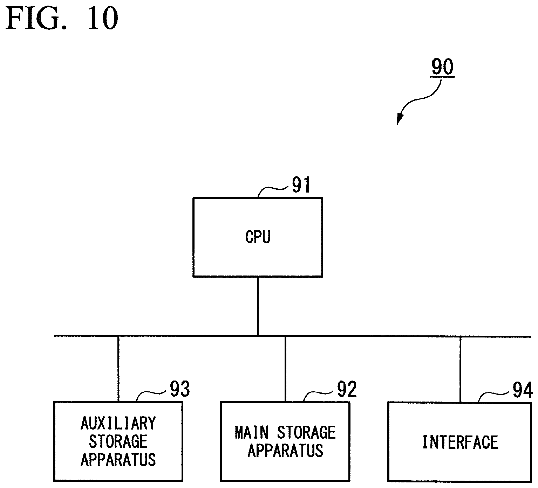

Fig. 10 is a schematic block diagram showing a configuration of a computer according to at least one embodiment.

A computer 90 includes a CPU 91, a main storage apparatus 92, an auxiliary storage apparatus 93, and an interface 94.

The management device 30 described above is installed in the computer 90. An operation of each processing unit described above is stored in the auxiliary storage apparatus 93 in a form of a program. The CPU 91 reads out the program from the auxiliary storage apparatus 93, loads the program into the main storage apparatus 92, and executes the above process in accordance with the program. Further, the CPU 91 ensures a storage area corresponding to each of the above-described storage units in the main storage apparatus 92 according to the program.

Examples of the auxiliary storage apparatus 93 include a hard disk drive (HDD), a solid state drive (SSD), a magnetic disk, a magneto-optical disk, a compact disc read only memory (CD-ROM), and a digital versatile disc read only memory (DVD-ROM), a semiconductor memory, and the like. The auxiliary storage apparatus 93 may be an internal medium directly connected to a bus of the computer 90 or an external medium connected to the computer 90 via the interface 94 or a communication line. Further, in a case where this program is distributed to the computer 90 via the communication line, the computer 90 which receives the distribution may expand the program into the main storage apparatus 92 and execute the above process. In at least one embodiment, the auxiliary storage apparatus 93 is a non-transitory storage medium.

Further, the program may be a program for realizing some of the functions described above. Further, the program may be a so-called difference file (a difference program) which realizes the above-described function in combination with another program already stored in the auxiliary storage apparatus 93.

### [Industrial Applicability]

According to at least one of the above aspects, a management device can estimate a process of a machine which executes a complicated work.

### [Reference Signs List]

1 process management system
10 machine tool
20 measurement system
30 management device
31 time series acquisition unit
32 dividing unit
33 clustering unit
34 cluster storage unit
35 process input unit
36 relationship specifying unit
37 relationship storage unit
38 classification unit
39 process estimation unit
40 output unit
41 group specifying unit

## Claims

1. A management device comprising:
a time series acquisition unit (31) that is configured to acquire a plurality of continuous time series while the machine is in operation in a time series related to power consumption of a machine for a certain time;
a classification unit (38) that is configured to classify each of a plurality of time series in which the power consumption is higher than a threshold value in the plurality of time series into any one of a plurality of clusters; and
a process estimation unit (39) that is configured to estimate a process executed by the machine at a time related to the plurality of time series, based on relationship information indicating a relationship between the plurality of clusters and the process of the machine, and a type of the cluster into which the time series is classified,
wherein the relationship information is information associating the cluster with the process, and in the relationship information, the process estimation unit (39) estimates the process associated with the most frequent cluster among the clusters into which each of the plurality of time series is classified, as the process executed by the machine at the time related to the plurality of time series, or
wherein the relationship information is information associating the cluster with the process, and in the relationship information, the process estimation unit (39) estimates the process associated with a plurality of higher clusters which appear frequently among the clusters into which each of the plurality of time series is classified, as the process executed by the machine at the time related to the plurality of time series, or
wherein the relationship information is information associating an appearance pattern of the cluster with the process, and in the relationship information, the process estimation unit (39) estimates the process associated with an appearance pattern similar to the appearance pattern of the cluster into which each of the plurality of time series is classified, as the process executed by the machine at the time related to the plurality of time series.

2. The management device according to Claim 1,
wherein the plurality of clusters are specified in advance by clustering a plurality of time series related to power consumption of the machine for a certain time.

3. The management device according to Claim 2,
wherein the clustering is performed by a K-means method, a ward method, a shortest distance method, a group average method, or a self-organizing map.

4. The management device according to Claim 2 or 3,
wherein the number of clusters divided by the clustering is set to a value larger than the number of types of the process to be estimated.

5. A management method comprising the steps of:
acquiring a plurality of continuous time series while the machine is in operation in a time series related to power consumption of a machine for a certain time;
classifying each of a plurality of time series in which the power consumption is higher than a threshold value in the plurality of time series into any one of a plurality of clusters; and
estimating a process executed by the machine at a time related to the plurality of time series, based on relationship information indicating a relationship between the plurality of clusters and the process of the machine, and a type of the cluster into which the time series is classified,
wherein the relationship information is information associating the cluster with the process, and in the relationship information, estimating the process associated with the most frequent cluster among the clusters into which each of the plurality of time series is classified, as the process executed by the machine at the time related to the plurality of time series, or
wherein the relationship information is information associating the cluster with the process, and in the relationship information, estimating the process associated with a plurality of higher clusters which appear frequently among the clusters into which each of the plurality of time series is classified, as the process executed by the machine at the time related to the plurality of time series, or
wherein the relationship information is information associating an appearance pattern of the cluster with the process, and in the relationship information, estimating the process associated with an appearance pattern similar to the appearance pattern of the cluster into which each of the plurality of time series is classified, as the process executed by the machine at the time related to the plurality of time series.

6. A program causing a computer to execute:
acquiring a plurality of continuous time series while the machine is in operation in a time series related to power consumption of a machine for a certain time;
classifying each of a plurality of time series in which the power consumption is higher than a threshold value in the plurality of time series into any one of a plurality of clusters; and
estimating a process executed by the machine at a time related to the plurality of time series, based on relationship information indicating a relationship between the plurality of clusters and the process of the machine, and a type of the cluster into which the time series is classified,
wherein the relationship information is information associating the cluster with the process, and in the relationship information, estimating the process associated with the most frequent cluster among the clusters into which each of the plurality of time series is classified, as the process executed by the machine at the time related to the plurality of time series, or
wherein the relationship information is information associating the cluster with the process, and in the relationship information, estimating the process associated with a plurality of higher clusters which appear frequently among the clusters into which each of the plurality of time series is classified, as the process executed by the machine at the time related to the plurality of time series, or
wherein the relationship information is information associating an appearance pattern of the cluster with the process, and in the relationship information, estimating the process associated with an appearance pattern similar to the appearance pattern of the cluster into which each of the plurality of time series is classified, as the process executed by the machine at the time related to the plurality of time series.

## Patentansprüche

1. Eine Verwaltungsvorrichtung, aufweisend:
eine Zeitreihen-Akquirierungseinheit (31), die konfiguriert ist, um eine Vielzahl von kontinuierlichen Zeitreihen zu akquirieren, während sich die Maschine in einer Zeitreihe bezogen auf einen Energieverbrauch einer Maschine für eine bestimmte Zeit in Betrieb befindet;
eine Klassifikationseinheit (38), die konfiguriert ist, um jeder einer Vielzahl von Zeitreihen, in der der Energieverbrauch größer ist als ein Schwellenwert in der Vielzahl von Zeitreihen, in irgendeinen einer Vielzahl von Clustern zu klassifizieren; und
eine Prozessschätzeinheit (39), die konfiguriert ist, um einen durch die Maschine zu einer Zeit bezogen auf die Vielzahl von Zeitreihen ausgeführten Prozess basierend auf Beziehungsinformationen zu schätzen, die eine Beziehung zwischen der Vielzahl von Clustern und dem Prozess der Maschine anzeigen, und einem Typ des Clusters, in dem die Zeitreihe klassifiziert ist,
wobei die Beziehungsinformationen Informationen sind, die den Cluster mit dem Prozess verknüpfen, und in den Beziehungsinformationen die Prozessschätzeinheit (39) den Prozess, der mit dem häufigsten Cluster unter den Clustern verknüpft ist, in die jede der Vielzahl von Zeitreihen klassifiziert ist, als den Prozess schätzt, der durch die Maschine zu der Zeit bezogen auf die Vielzahl von Zeitreihen ausgeführt wird, oder
wobei die Beziehungsinformationen Informationen sind, die den Cluster mit dem Prozess verknüpfen, und in den Beziehungsinformationen die Prozessschätzeinheit (39) den mit einer Vielzahl von höheren Clustern verknüpften Prozess, die häufig unter den Clustern auftreten, in denen jede der Vielzahl von Zeitreihen klassifiziert ist, als den Prozess schätzt, der durch die Maschine zu der Zeit bezogen auf die Vielzahl von Zeitreihen ausgeführt wird, oder
wobei die Beziehungsinformationen Informationen sind, die ein Auftrittsmuster des Clusters mit dem Prozess verknüpfen, und in den Beziehungsinformationen die Prozessschätzeinheit (39) den mit einem Auftrittsmuster ähnlich zu dem Auftrittsmuster des Clusters, in den jede der Vielzahl von Zeitreihen klassifiziert ist, verknüpften Prozess, als den Prozess schätzt, der durch die Maschine zu der Zeit bezogen auf die Vielzahl von Zeitreihen ausgeführt wird.

2. Die Verwaltungsvorrichtung nach Anspruch 1,
wobei die Vielzahl von Clustern durch Clustern einer Vielzahl von Zeitreihen bezogen auf einen Energieverbrauch der Maschine für eine bestimmte Zeit im Voraus spezifiziert sind.

3. Die Verwaltungsvorrichtung nach Anspruch 2,
wobei das Clustern durch ein K-Mittelungsverfahren, ein Stationsverfahren, ein Verfahren der kürzesten Entfernung, ein Gruppendurchschnittsverfahren, oder eine selbstorganisierende Abbildung durchgeführt wird.

4. Die Verwaltungsvorrichtung nach Anspruch 2 oder 3,
wobei die Anzahl an durch das Clustern aufgeteilten Clustern auf einen Wert eingestellt ist, der größer ist als die Anzahl an Typen des zu schätzenden Prozesses.

5. Ein Verwaltungsverfahren mit den Schritten zum:
Akquirieren einer Vielzahl von kontinuierlichen Zeitreihen, während sich die Maschine in einer Zeitreihe bezogen auf einen Energieverbrauch einer Maschine für eine bestimmte Zeit in Betrieb befindet;
Klassifizieren jeder einer Vielzahl von Zeitreihen, in der der Energieverbrauch größer ist als ein Schwellenwert in der Vielzahl von Zeitreihen, in irgendeinen einer Vielzahl von Clustern; und
Schätzen eines durch die Maschine zu einer Zeit bezogen auf die Vielzahl von Zeitreihen ausgeführten Prozesses basierend auf Beziehungsinformationen, die eine Beziehung zwischen der Vielzahl von Clustern und dem Prozess der Maschine anzeigen, und einem Typ des Clusters, in dem die Zeitreihe klassifiziert ist,
wobei die Beziehungsinformationen Informationen sind, die den Cluster mit dem Prozess verknüpfen, und in den Beziehungsinformationen der Prozess, der mit dem häufigsten Cluster unter den Clustern verknüpft ist, in die jede der Vielzahl von Zeitreihen klassifiziert ist, als der Prozess geschätzt wird, der durch die Maschine zu der Zeit bezogen auf die Vielzahl von Zeitreihen ausgeführt wird, oder
wobei die Beziehungsinformationen Informationen sind, die den Cluster mit dem Prozess verknüpfen, und in den Beziehungsinformationen der mit einer Vielzahl von höheren Clustern verknüpfte Prozess, die häufig unter den Clustern auftreten, in denen jede der Vielzahl von Zeitreihen klassifiziert ist, als der Prozess geschätzt wird, der durch die Maschine zu der Zeit bezogen auf die Vielzahl von Zeitreihen ausgeführt wird, oder
wobei die Beziehungsinformationen Informationen sind, die ein Auftrittsmuster des Clusters mit dem Prozess verknüpfen, und in den Beziehungsinformationen der mit einem Auftrittsmuster ähnlich zu dem Auftrittsmuster des Clusters, in den jede der Vielzahl von Zeitreihen klassifiziert ist, verknüpfte Prozess geschätzt wird, als der durch die Maschine zu der Zeit bezogen auf die Vielzahl von Zeitreihen ausgeführte Prozess.

6. Ein Programm, das einen Computer veranlasst, Folgendes auszuführen:
Akquirieren einer Vielzahl von kontinuierlichen Zeitreihen, während sich die Maschine in einer Zeitreihe bezogen auf einen Energieverbrauch einer Maschine für eine bestimmte Zeit in Betrieb befindet;
Klassifizieren jeder einer Vielzahl von Zeitreihen, in der der Energieverbrauch größer ist als ein Schwellenwert in der Vielzahl von Zeitreihen, in irgendeinen einer Vielzahl von Clustern; und
Schätzen eines durch die Maschine zu einer Zeit bezogen auf die Vielzahl von Zeitreihen ausgeführten Prozesses basierend auf Beziehungsinformationen, die eine Beziehung zwischen der Vielzahl von Clustern und dem Prozess der Maschine anzeigen, und einem Typ des Clusters, in dem die Zeitreihe klassifiziert ist,
wobei die Beziehungsinformationen Informationen sind, die den Cluster mit dem Prozess verknüpfen, und in den Beziehungsinformationen der Prozess, der mit dem häufigsten Cluster unter den Clustern verknüpft ist, in die jede der Vielzahl von Zeitreihen klassifiziert ist, als der Prozess geschätzt wird, der durch die Maschine zu der Zeit bezogen auf die Vielzahl von Zeitreihen ausgeführt wird, oder
wobei die Beziehungsinformationen Informationen sind, die den Cluster mit dem Prozess verknüpfen, und in den Beziehungsinformationen der mit einer Vielzahl von höheren Clustern verknüpfte Prozess, die häufig unter den Clustern auftreten, in denen jede der Vielzahl von Zeitreihen klassifiziert ist, als der Prozess geschätzt wird, der durch die Maschine zu der Zeit bezogen auf die Vielzahl von Zeitreihen ausgeführt wird, oder
wobei die Beziehungsinformationen Informationen sind, die ein Auftrittsmuster des Clusters mit dem Prozess verknüpfen, und in den Beziehungsinformationen der mit einem Auftrittsmuster ähnlich zu dem Auftrittsmuster des Clusters, in den jede der Vielzahl von Zeitreihen klassifiziert ist, verknüpfte Prozess geschätzt wird, als der durch die Maschine zu der Zeit bezogen auf die Vielzahl von Zeitreihen ausgeführte Prozess.

## Revendications

1. Dispositif de gestion comprenant :
une unité d'acquisition de séries chronologiques (31) qui est configurée pour acquérir une pluralité de séries chronologiques continues tandis que la machine est en fonctionnement dans une série chronologique liée à une consommation d'énergie d'une machine pendant un certain temps ;
une unité de classification (38) qui est configurée pour classifier chacune d'une pluralité de séries chronologiques dans lesquelles la consommation d'énergie est supérieure à une valeur seuil dans la pluralité de séries chronologiques dans l'un quelconque d'une pluralité de groupes ; et
une unité d'estimation de processus (39) qui est configurée pour estimer un processus exécuté par la machine à un moment lié à la pluralité de séries chronologiques, sur la base d'informations de relation indiquant une relation entre la pluralité de groupes et le processus de la machine, et d'un type du groupe dans lequel la série chronologique est classifiée,
dans lequel les informations de relation sont des informations associant le groupe au processus, et dans les informations de relation, l'unité d'estimation de processus (39) estime le processus associé au groupe le plus fréquent parmi les groupes dans lesquels chacune de la pluralité de séries chronologiques est classifiée, en tant que processus exécuté par la machine au moment lié à la pluralité de séries chronologiques, ou
dans lequel les informations de relation sont des informations associant le groupe au processus, et dans les informations de relation, l'unité d'estimation de processus (39) estime le processus associé à une pluralité de groupes supérieurs qui apparaissent fréquemment parmi les groupes dans lesquels chacune de la pluralité de séries chronologiques est classifiée, en tant que processus exécuté par la machine au moment lié à la pluralité de séries chronologiques, ou
dans lequel les informations de relation sont des informations associant un schéma d'apparition du groupe au processus, et dans les informations de relation, l'unité d'estimation de processus (39) estime le processus associé à un schéma d'apparition similaire au schéma d'apparition du groupe dans lequel chacune de la pluralité de séries chronologiques est classifiée, en tant que processus exécuté par la machine au moment lié à la pluralité de séries chronologiques.

2. Dispositif de gestion selon la revendication 1,
dans lequel la pluralité de groupes sont spécifiés en avance en regroupant une pluralité de séries chronologiques liées à une consommation d'énergie de la machine pendant un certain temps.

3. Dispositif de gestion selon la revendication 2,
dans lequel le regroupement est réalisé par une méthode des K moyennes, une méthode de Ward, une méthode de la plus courte distance, une méthode de la moyenne de groupe ou une carte auto-organisatrice.

4. Dispositif de gestion selon la revendication 2 ou 3,
dans lequel le nombre de groupes divisés par le regroupement est réglé sur une valeur plus grande que le nombre de types du processus devant être estimé.

5. Procédé de gestion comprenant les étapes consistant à :
acquérir une pluralité de séries chronologiques continues tandis que la machine est en fonctionnement dans une série chronologique liée à une consommation d'énergie d'une machine pendant un certain temps ;
classifier chacune d'une pluralité de séries chronologiques dans lesquelles la consommation d'énergie est supérieure à une valeur seuil dans la pluralité de séries chronologiques dans l'un quelconque d'une pluralité de groupes ; et
estimer un processus exécuté par la machine à un moment lié à la pluralité de séries chronologiques, sur la base d'informations de relation indiquant une relation entre la pluralité de groupes et le processus de la machine, et d'un type du groupe dans lequel la série chronologique est classifiée,
dans lequel les informations de relation sont des informations associant le groupe au processus, et dans les informations de relation, estimer le processus associé au groupe le plus fréquent parmi les groupes dans lesquels chacune de la pluralité de séries chronologiques est classifiée, en tant que processus exécuté par la machine au moment lié à la pluralité de séries chronologiques, ou
dans lequel les informations de relation sont des informations associant le groupe au processus, et dans les informations de relation, estimer le processus associé à une pluralité de groupes supérieurs qui apparaissent fréquemment parmi les groupes dans lesquels chacune de la pluralité de séries chronologiques est classifiée, en tant que processus exécuté par la machine au moment lié à la pluralité de séries chronologiques, ou
dans lequel les informations de relation sont des informations associant un schéma d'apparition du groupe au processus, et dans les informations de relation, estimer le processus associé à un schéma d'apparition similaire au schéma d'apparition du groupe dans lequel chacune de la pluralité de séries chronologiques est classifiée, en tant que processus exécuté par la machine au moment lié à la pluralité de séries chronologiques.

6. Programme amenant un ordinateur à exécuter :
l'acquisition d'une pluralité de séries chronologiques continues tandis que la machine est en fonctionnement dans une série chronologique liée à une consommation d'énergie d'une machine pendant un certain temps ;
la classification de chacune d'une pluralité de séries chronologiques dans lesquelles la consommation d'énergie est supérieure à une valeur seuil dans la pluralité de séries chronologiques dans l'un quelconque d'une pluralité de groupes ; et
l'estimation d'un processus exécuté par la machine à un moment lié à la pluralité de séries chronologiques, sur la base d'informations de relation indiquant une relation entre la pluralité de groupes et le processus de la machine, et d'un type du groupe dans lequel la série chronologique est classifiée,
dans lequel les informations de relation sont des informations associant le groupe au processus, et dans les informations de relation, l'estimation du processus associé au groupe le plus fréquent parmi les groupes dans lesquels chacune de la pluralité de séries chronologiques est classifiée, en tant que processus exécuté par la machine au moment lié à la pluralité de séries chronologiques, ou
dans lequel les informations de relation sont des informations associant le groupe au processus, et dans les informations de relation, l'estimation du processus associé à une pluralité de groupes supérieurs qui apparaissent fréquemment parmi les groupes dans lesquels chacune de la pluralité de séries chronologiques est classifiée, en tant que processus exécuté par la machine au moment lié à la pluralité de séries chronologiques, ou
dans lequel les informations de relation sont des informations associant un schéma d'apparition du groupe au processus, et dans les informations de relation, l'estimation du processus associé à un schéma d'apparition similaire au schéma d'apparition du groupe dans lequel chacune de la pluralité de séries chronologiques est classifiée, en tant que processus exécuté par la machine au moment lié à la pluralité de séries chronologiques.
